Europäisches Patentamt

European Patent Office

Office européen des brevets

(19)

(11) Numéro de publication: **0 206 894**
**B1**

(12) **FASCICULE DE BREVET EUROPEEN**

(45) Date de publication du fascicule du brevet: **29.08.90**

(21) Numéro de dépôt: **86401220.8**

(22) Date de dépôt: **05.06.86**

(51) Int. Cl.⁵: **C 08 F 291/18,** C 08 F 255/02, C 08 J 7/18

(54) **Films de polyoléfines photoréticulables et leur procédé de fabrication.**

(30) Priorité: **20.06.85 FR 8509395**

(43) Date de publication de la demande:
**30.12.86 Bulletin 86/52**

(45) Mention de la délivrance du brevet:
**29.08.90 Bulletin 90/35**

(84) Etats contractants désignés:
**AT BE CH DE FR GB IT LI LU NL SE**

(56) Documents cités:
**DE-A-2 309 613**
**DE-A-2 928 512**
**FR-A-2 075 156**
**US-A-3 798 035**
**US-A-4 321 118**

(73) Titulaire: **ATOCHEM**
**4 & 8, Cours Michelet La Défense 10**
**F-92800 Puteaux (FR)**

(72) Inventeur: **Delfanne, Isabelle**
**45, Résidence Clairval**
**F-27300 Bernay (FR)**
Inventeur: **Leriche, Christian**
**32-7 Ebisu 3-chome**
**Shibuya-ku Tokyo 150 (JP)**
Inventeur: **Nawrot, Serge**
**46, Rue Marceau Boulay**
**F-27470 Serquigny (FR)**

(74) Mandataire: **Foiret, Claude et al**
**ATOCHEM Département Propriété Industrielle**
**F-92091 Paris la Défense 10 Cédex 42 (FR)**

Courier Press, Leamington Spa, England.

**Description**

De nombreuses méthodes ont déjà été proposées pour réticuler les films de polyoléfines par irradiation; une des plus simples consiste à soumettre ces films à un bombardement électronique (brevets U.S. no 3,022,543 et 3,754,063) mais il faut utiliser un bombardement intense pour obtenir un degré de réticulation appréciable; il en est de même quand on les réticule par photoirradiation. Le FR—A—2 075 156 décrit un procédé de réticulation de polyoléfines consistant à exposer une polyoléfine à un rayonnement UV en présence d'un dérivé de benzoïne associé ou non à un agent de réticulation possédant au moins deux groupes insaturés oléfiniques dans sa molécule. Le procédé, décrit de façon générale, ne permet d'obtenir que des produits de faible taux de gel de l'ordre de 35% pour des intensités de rayonnement de l'ordre de 6500 watts. Le US—A—3,798,035, comme les précédents, décrit un procédé de réticulation de polyoléfine par exposition de la polyoléfine à un rayonnement UV en présence d'un photoinitiateur et d'un agent de réticulation; du fait du manque de synergie entre les adjuvants la réticulation est incomplète ce qui nécessite un traitement par solvant des polymères résultants pour éliminer les produits non réticulés.

La présente invention a pour objet des films de polyoléfines qui, du fait de leur composition spéciale, réticulant à un degré élevé lorsqu'ils sont photoirradiés, même si les doses de rayonnement auxquels ils sont soumis sont relativement modérées.

Ces films à aptitude élevée à la photoréticulation, films que, pour des raisons de simplification, nous appellerons par la suite "films réticulables", se caractérisent par le fait qu'ils contiennent dans leur masse, conjointement, in composé polyinsaturé et un photoinitiateur.

Par film de polyolefines nous entendons les films de copolymère éthylène-acétate de vinyle.

Par composé polyinsaturé, nous entendons le triméthacrylate de triméthylolpropane ou un polyuréthane acrylate.

On peut, bien entendu, utiliser ces composés seuls ou en mélanges. Grâce aux insaturations qu'il possède, ce composé est susceptible de réagir avec les insaturations également présentes dans le film de polyoléfine qui le contient et, par suite, de le réticuler.

Mais, cette réaction qui aura lieu grâce à l'apport d'énergie fourni par photoirradiation (par exposition à la lumière visible, ou aux U.V. ou au rayonnement laser ...) sera renforcée par la présence d'un photoinitiateur, également présent dans le film, qui va agir en synergie avec le composé polyinsaturé.

Ce photoinitiateur sera l'(hydroxy-1-cyclohexyl)-phénylcétone ou le benzildiméthylacétal.

Les films réticulables de la présente invention contiennent de, 1 à 10 pour cent, de préférence 2 à 5 pour cent, en poids, de composé polyinsaturé et de, 0,01 à 1 pour cent, en poids, de photoinitiateur.

Pour fabriquer ces films réticulables, on peut procéder de diverses manières, l'essentiel étant que le composé polyinsaturé et le photoinitiateur y soient bien dispersés.

On peut, par exemple:

soit alimenter une extrudeuse munie d'une filière à film avec un mélange préalablement préparé de granulés (ou de poudre) de polyoléfine, de composé polyinsaturé et de photoinitiateur.

soit alimenter l'extrudeuse avec des granulés (ou de la poudre de polyoléfine) et un mélange-maître préalablement préparé de polyoléfine, de composé polyinsaturé et de photoinitiateur, ce mélange-maître ayant été réalisé sur une bonne extrudeuse-malaxeuse tel que comalaxeur Buss ou extrudeuse à double vis Werner und Pfleidener.

soit alimenter l'extrudeuse avec un mélange de granulés de polyoléfine et de photoinitiateur et imprégner le film résultant avec le composé polyinsaturé, cette imprégnation étant réalisée en continu ou en discontinu, par immersion du film dans un bain du composé polyinsaturé lui-même, s'il est liquide, ou d'une solution de ce composé dans un solvant lorsqu'il est solide.

Les films réticulables sont photoirradiés par les méthodes bien connues de l'homme du métier.

Ils peuvent être soumis à l'irradiation fournie par des lampes émettant de la lumière dans le visible ou l'ultra-violet, telles que lampes à mercure à très haute, haute ou basse pression, lampes à xénon, à halogène, à arc de carbone, à incandescence.

La durée d'irradiation dépendra de la nature de la lampe utilisée, de l'intensité de la lumière émise et de la distance entre la lampe et le film.

Ils peuvent être également exposés tout simplement au soleil. Les films réticulables réticulent tellement que l'on peut les réticuler en continu-c'est ainsi que l'on peut les réticuler, en continu, lors de leur fabrication, dès la sortie de filière et enrouler en bobine non pas des films réticulables mais des films réticulés.

Entre autres avantages, la réticulation augmente la résistance aux solvants, la résistance à la déchirure, au fluage (surtout à chaud) ... Elle augmente l'adhérence sur de nombreux substrats, notamment sur les métaux, des copolymères éthylène-acétate de vinyle utilisés comme adhésifs à l'état fondu.

Il est bien évident que cette invention peut s'appliquer à tout objet en polyoléfine, moulé ou extrudé, présentant une certaine surface susceptible d'être réticulée par irradiation et pas nécessairement à des films.

Dans les exemples que nous décrivons ci-dessous, exemples qui servent à illustrat l'invention sans toutefois la limiter:

L'abbréviation EVA désigne le copolymère éthylène-acétate de vinyle.

L'indice de fluidité (I.F.) mesuré selon la norme ASTM-D 1238 est exprimé en grammes/10 minutes sous une charge de 2,16 kg à 190°C.

Le taux de gels a été déterminé par mesure de l'insoluble après 24 heures de contact avec du xylène à ébullition. Il est exprimé en pour cent.

Les composés polyinsaturés, mis en oeuvre, ont été:

le triméthacrylate de triméthylolpropane (TMTMP), commercialisé par la Société ROHM and HAAS sous l'appellation ROCRYL X 980,

un polyester uréthanne acrylique à base de diisocyanate aromatique (PUADIA) commercialisé par la Société DIAMOND SHAMROCK sous l'appellation PHOTOMER 6195.

un prépolymère à doubles liaisons en bout de chaîne provenant d'un acrylate à base de polyuréthanne aromatique (PAPUA), commercialisé par DIAMOND SHAMROCK sous l'appellation PHOTOMER 6206.

Les agents photoinitiateurs, mis en oeuvre, ont été:

l'(Hydroxy-1-cyclohexyl)-phénylcétone (HCPC) commercialisé par la Société CIBA-GEIGY sous l'appellation IRGACURE 184.

le benzildiméthylacétal (BDMA) commercialisé par CIBA-GEIGY sous l'appellation IRGACURE 651.

## Exemple no 1

On extrude des films de 100 μm d'épaisseur, en alimentant une extrudeuse dont la température moyenne a été réglée à environ 160°C, extrudeuse munie d'une filière plate, avec:

dans l'essai (a), des granulés d'un EVA à 14 pour cent d'acétate de vinyle et d'I.F.=5,6,

dans l'essai (b), un mélange de granulés du même EVA et de composé polyinsaturé,

à raison de 98 parties en poids de granulés d'EVA et 2 parties de TMTMP,

dans l'essai (c), un mélange de granulés de même EVA et d'agent photoinitiateur,

à raison de 99,9 parties en poids de granulés d'EVA et 0,1 partie d'HCPC,

dans l'essai (d), un mélange de granulés du même EVA, d'agent photoinitiateur et de composé polyinsaturé à raison de 97,9 parties en poids d'EVA, 2 de TMTMP et 0,1 d'HCPC.

L'indice de fluidité et le taux de gels sont mesurés sur ces films avant et après irradiation UV (l'irradiation UV est pratiquée en exposant les échantillons de films pendant 40 secondes à l'action d'une lampe UV, distante de 20 cm et de puissance 1,8 kw).

Les résultats trouvés sont rassemblés dans le tableau ci-dessous:

| Essai | Composition du film parties en poids | | | I.F. | | Taux de gels | |
|---|---|---|---|---|---|---|---|
| | | | | avant irrad. | après irrad. | avant irrad. | après irrad. |
| | EVA | TMTMP | HCPC | | | | |
| a | 100 | 0 | 0 | 5,6 | 5,6 | 0 | 0 |
| b | 98 | 2 | 0 | 5,5 | 2,7 | 0 | 0 |
| c | 99,9 | 0 | 0,1 | 4,6 | 1,6 | 0 | 0 |
| d | 97,9 | 2 | 0,1 | 5,2 | 0,2 | 0 | 94,6 |

Ils montrent clairement l'effet de synergie entre le composé polyinsaturé et l'agent photoinitiateur.

D'autre part, d'autres essais ont montré que le fluage à chaud et la résistance à la déchire des films (d) est bien supérieur après irradiation qu'avent (voir tableau ci-dessous).

Le fluage a été mesuré à 50°C, sous une charge de 500 g, sur des bandelettes de film de 10 mm de large découpées soit dans le sens de l'extrusion, soit dans le sens perpendiculaire.

Il est exprimé en pourcentages d'allongements en fonction du temps.

La résistance à la déchirure a été mesurée selon la norme ASTM—G 07055 sur des bandelettes de films découpées dans les deux sens de l'extrusion.

Elle est exprimée en cN.

EP 0 206 894 B1

| | | FLUAGE A 50°C | | | | | RESISTANCE DECHIRURE |
|---|---|---|---|---|---|---|---|
| | | 5 min | 15 min | 1 H | 5 H | 24 H | |
| Avant irrad. | Sens parallèle | 160 | 185 | 187 | 205 | 285 | 640 |
| Après irrad. | " " | 105 | 155 | 157 | 165 | 185 | 1000 |
| Avant irrad. | Sens perpendicul. | 180 | 360 | 375 | 416 | 437 | 750 |
| Après irrad. | " " | 145 | 225 | 227 | 250 | 265 | 1170 |

Exemple no 2

Des films de 100 µm d'épaisseur ont été réalisés en alimentant une extrudeuse munie d'une filière à film avec un mélange de granulés d'un EVA à 14 pour cent d'acétate de vinyle et d'indice de fluidité égal à 5,6 et de granulés de mélange-maître.

Ce mélange-maître avait été préalablement préparé en alimentant une extrudeuse WERNER UND PFLEIDERER ZSK 30 avec un mélange de granulés du même EVA que ci-dessous et divers composés polyinsaturés et agents photoinitiateurs, à diverses doses.

Les films obtenus, refroidis par passages sur cylindres mais encore à la température approximative de 30°C ont été irradiés, en continu en passant à la vitesse de 3 cm/mn sous une lampe U.V. (Tension: 250+ ou — 20 V — Intensité=8,8 A — Puissance linéaire: 80 W/cm) dont ils étaient distante de 40 cm.

Des échantillons de films avaient été prélevés avant la mise en route de la lampe de manière à en mesurer l'indice de fluidité.

Les résultats de ces essais sont rassemblés dans le tableau ci-dessous:

| COMPOSITION DU FILM, parties en poids | | | | | | Indice de Fluidité | |
| Polyoléfine | | Composé polyinsat. | | Agent photoinit. | | avant irradiat. | après irradiat. |
| Nature | Parties | Nature | Parties | Nature | Parties | | |
|---|---|---|---|---|---|---|---|
| EVA à 14 % acétate de vinyle | 97,88 | PUADIA | 2 | HCPC | 0,12 | 5,3 | 2,8 |
| " | 97,80 | " | 2 | " | 0,20 | 5,0 | 0,5 |
| " | 95,88 | " | 4 | " | 0,12 | 5,5 | 1,8 |
| " | 97,88 | PAPUA | 2 | " | 0,12 | 4,2 | 3,6 |
| " | 97,80 | " | 2 | " | 0,20 | 5,0 | 0,7 |
| " | 95,88 | " | 4 | " | 0,12 | 5,4 | 0,9 |
| " | 95 | TMTMP | 2 | BDMA | 0,06 | 4,0 | 2,65 |
| " | 93 | " | 4 | " | 0,12 | 4,2 | 0,60 |

# EP 0 206 894 B1

### Exemple no 3

Cet exemple a pour but d'illustrer le fait que la réticulation s'accompagne d'une augmentation du pouvoir adhésif sur aluminium.

Des films de 100 µm d'épaisseur sont préparés suivant la méthode de l'exemple 1 avec la composition suivante:

100 parties en poids de granulés d'un EVA à 40 pour cent d'acétate de vinyle.

0,1 parties d'un anti-oxydant phénolique

5  parties de TMTMP

0,1 parties d'HCPC.

Les films sont ensuite irradiés de la même mainère qu'à l'exemple 1 pendant 20 et 40 secondes.

Le tableau ci-dessous montre la variation de l'indice de fluidité en fonction de l'irradiation.

|  | Indice de fluidité des films |
|---|---|
| Avant irradiation | 185 |
| Après irradiation de 20 secondes | 100 |
| Après irradiation de 40 secondes | 50 |

Avant et après irradiation, ils ont été utilisés pour coller des plaquettes d'aluminium entre elles (en réalisant un sandwich aluminium — film — aluminium, portant ce sandwich sous une pression de 0,5 bars à la température de 80°C pendant 300 secondes, de manière à fondre légèrement le film, et laissant refroidir).

La force d'arrachement par pelage de ces assemblages a ensuite été mesurée à la température de 20°C.

Cette force qui était de 0,1 da N/cm pour des assemblages réalisés avec des films non irradiés passe à 1,8 de N/cm avec des films irradiés pendant 40 secondes.

De plus, les assemblages de plaquettes d'aluminium réalisés avec les films irradiés fluent moins à chaud que ceux réalisés avec des films non irradiés.

### Exemple no 4

Des films de 50 µm d'épaisseur ont été extrudés en alimentant une extrudeuse avec des mélanges de granulés de copolymères éthylène-acétate de vinyle à 27 pour cent d'acétate de vinyle et d'I.F.=6 ou à 14 · pour cent d'acétate de vinyle et d'I.F.=5,6 et de photoinitiateurs à différentes doses.

Ces films ont ensuite été immergés pendant 24 heures dans des cuves contenant divers composés polyinsaturés (comme, dans le cas présent, c'étaient des liquides, il n'a pas été nécessaire de les mettre en solution) séchés et irradiés UV pendant 20 secondes comme dans l'exemple 1.

L'indice de fluidité de ces films a été mesuré avant et après irradiation.

Les résultats trouvés sont rassemblés dans le tableau ci-dessous:

| COMPOSITION DU FILM | | | | Nature du composé polyinsaturé du bain d'imprégnation | Indice de Fluidité | |
|---|---|---|---|---|---|---|
| Nature | Parties | Agent photoinitiateur | | | avant irradiation | après irradiation |
| | | Nature | Parties | | | |
| EVA à 27 % d'AV | 99,8 | HCPC | 0,2 | PUADIA | 6 | 0,03 |
| " | 99,8 | " | 0,2 | PAPUÃ | 6 | 0,05 |
| EVA à 14 % d'AV | 99,8 | " | 0,2 | DAPEG | 5,6 | 1,9 |
| " | 99,5 | " | 0,5 | " | 5,6 | 2,6 |
| " | 99,8 | BDMA | 0,2 | " | 5,6 | 2,4 |
| " | 99,5 | " | 0,5 | " | 5,6 | 2,3 |

## Revendications

1. Film de copolymère éthylène-acétate de vinyle photoréticulable contenant un composé polyinsaturé et un agent photoinitiateur caractérisé en ce que le composé polyinsaturé, à raison de 1 à 10 pour cent en poids, est le triméthacrylate de triméthylolpropane ou un polyuréthane acrylate et l'agent photoinitiateur, à raison de 0,01 à 1 pour cent en poids, est l'(hydroxy-1-cyclohexyl)-phénylcétone ou le benzildiméthylacétal.

2. Procédé de fabrication du film selon la revendication 1 caractérisé en ce que l'on extrude un mélange de granulés de copolymère et de granulés d'un mélange maître de composé polyinsaturé et d'agent initiateur.

3. Procédé de fabrication du film selon la revendication 1 caractérisé en ce que l'on extrude un mélange de granulés de copolymère et de l'agent photoinitiateur en un film qui est ensuite imprégné de composé polyinsaturé.

## Patentansprüche

1. Film aus einem photovernetzbaren Ethylen-Vinylacetat-Copolymeren enthaltend eine polyungesättigte Verbindung und einen Photoinitiator, dadurch gekennzeichnet, daß die polyungesättigte Verbindung das Trimethylolpropantrimethacrylat oder ein Polyurethanacrylat in einer Menge von 1 bis 10 Gew.% ist und der Photoinitiator das (1-Hydroxy-cyclohexyl)-phenylketon oder das Benzildimethylacetal in einer Menge von 0,01 bis 1 Gew.% ist.

2. Verfahren zur Herstellung eines Films gemäß Anspruch 1, dadurch gekennzeichnet, daß man ein Gemisch aus Granulat des Copolymeren und Granulat eines Hauptgemischs aus polyungesättigter Verbindung und Initiator extrudiert.

3. Verfahren zur Herstellung eines Films gemäß Anspruch 1, dadurch gekennzeichnet, daß man ein Gemisch aus Granulat des Copolymeren und des Fotoinitiators zu einem Film extrudiert, der anschließend mit der polyungesättigten Verbindung imprägniert wird.

## Claims

1. A photo-crosslinkable ethylene/vinyl acetate copolymer film containing a polyunsaturated compound and a photoinitiator, characterised in that the polyunsaturated compound, in a ratio of 1 to 10% by weight, is trimethylene propane trimethacrylate or a polyurethane acrylate and the photoinitiator, in a ratio of 0.01 to 1% by weight, is 1-hydroxy-cyclohexyl phenyl ketone or benzyldimethylacetal.

2. A process for manufacturing a film according to claim 1, characterised in that a mixture of granulates of copolymer and granulates of a master-bunch of polyunsaturated compound and initiator is extruded.

3. A process for manufacturing a film according to claim 1, characterised in that a mixture of granulates of copolymer and of the photoinitiator is extruded in a film which is then impregnated with polyunsaturated compound.